# EUROPEAN PATENT APPLICATION

(11) **EP 4 575 876 A1**
(43) Date of publication of application: **25.06.2025**
(21) Application number: 23218281.6
(22) Date of filing: 19.12.2023
(51) Int. Cl.: G06F 30/20, G06F 30/33, G06F 30/337, G06F 30/31, G06F 30/367

(54) **A METHOD FOR AN AUTOMATIC DESIGN AND VERIFICATION OF A PROCESSOR'S PROGRAMMING AND SIMULATION TOOLS**

(71) Applicant: Codasip s.r.o, 602 00 Brno (CZ)
(72) Inventor: PRIKRYL, ZDENEK, 602 00 Brno (CZ); SNOBL, PAVEL, 602 00 Brno (CZ); MASARIK, KAREL, 602 00 Brno (CZ)
(74) Representative: Beck Greener LLP

(57) **Abstract**

A method for a design of a processor's programming and/or simulation tools, comprising developing a single model of a processor from a group consisting of: the processor: a hardware description of the processor; and a processor's specifications confirmed to represent the processor and/or the hardware description; and generating automatically by an Electronic Design Automation tool the processor's programming and/or the simulation tools from the single model of the processor and a set of design parameters. The method further comprises verifying the processor's programming and/or simulation tools using verification application(s) and a reference entity.

## Description

### BACKGROUND

### 1. Field

The present invention relates to design of a processor programming and/or simulation tools. More particularly, this invention is directed toward a design and optional verification of a processor's programming and/or simulation tools.

### 2. Description of Related Technology

It is customary that a processor is supplied with a collection of programming and optionally simulation tools that are specific to the processor, and thus facilitate creation and simulation of applications to be executed by the processor. During the life of the processor, the collection of programming and/or simulation tools may be re-designed by adding new features, functionality and other improvements known to a person of ordinary skill in the art. Such redesign is currently performed by human designer manually re-writing of either portions, e.g., a compiler, assembler, simulator, or the entire set of the programming and/or simulation tools.

Since these improvements are intended for an already developed processor, specifications of which cannot be changed, it is advisable to verify that the improvement does correctly function on the processor. Such verification is performed by a human designer manually building verification applications using the re-designed programming and/or simulation tools, executing the verification applications on the processor and/or the simulator and comparing thusly obtained results with expected values. The expected values comprise results determined independently of the execution of the application on the verification applicant on the processor and/or the simulator.

Since the re-design and the verification are performed largely by manual, non-automated human designer's involvement, it is prone to errors and lack of completeness. Therefore, a method addressing the above disclosed and other problems of the manner of current re-design and verification known to a person of ordinary skill in the art is needed.

### SUMMARY

According to a first aspect of the present invention, there is provided a method for a design of a processor's programming and/or simulation tools, comprising: developing a single model of a processor from a group consisting of: the processor; a hardware description of the processor; and a processor's specifications confirmed to represent the processor and/or the hardware description; and generating automatically by an Electronic Design Automation tool the processor's programming and/or the simulation tools from the single model of the processor and a set of design parameters.

In an embodiment, the developing the single model of the processor comprises: developing the single model in a language designed to unify a description of an instruction set and a description of a micro-architecture.

In an embodiment, the language, comprises: a Codasip Architecture Language.

In an embodiment, the set of design parameters is empty.

In an embodiment, the method further comprises: generating automatically by the Electronic Design Automation tool a verification environment in addition to the programming and/or the simulation tools from the single model of the processor; and verifying the programming tools by the verification environment by: executing at least one verification application and optional port(s) value(s) on a reference entity resulting in at least one state of at least one resource, each of the at least one state being characterized by at least one value; determining whether the at least one value characterizing each of the at least one state agrees with at least one expected value characterizing each of the at least one state; and providing the processor's programming tools when the determining shows agreement.

In an embodiment, the method further comprises: modifying the developed single model of the processor when the determining does not show agreement; and repeating the method according to the first aspect of the present invention.

In an embodiment, the at least one verification application comprises: at least one verification application forms a set of pre-prepared verification applications provided by the Electronic Design Automation tool, wherein each verification application includes at least one expected value.

In an embodiment, the method further comprises: generating by the Electronic Design Automation tool from the single model of the processor automatically a random program generator; and generating the at least one verification application and the at least one expected value characterizing each of the at least one state by the random program generator.

In an embodiment, the reference entity is the processor or a third-party simulator

In an embodiment, the method further comprises: generating automatically by the Electronic Design Automation tool a verification environment in addition to the programming and/or the simulation tools from the single model of the processor; and verifying the simulation tools by the verification environment by: verification application and optional port(s) value(s) on the simulation tools, resulting in at least one state of at least one resource, each of the at least one state being characterized by at least one first value; executing the at least one verification application and optional port(s) value(s) on a reference entity, resulting in at least one state of the at least one resource, each of the at least one state being characterized by at least one second value; determining whether the at least one first value characterizing each of the at least one state agree with the at least one second value characterizing each of the corresponding at least one state; and providing the processor's simulation tools when the determining shows agreement.

In an embodiment, the method further comprises: modifying the developed single model of the processor when the determining does not show agreement; and repeating the method of the first aspect of the present invention.

In an embodiment, the verification application comprises: at least one verification application forms a set of pre-prepared verification applications provided by the Electronic Design Automation tool, wherein each verification application includes at least one expected value.

In an embodiment, the method further comprises: generating by the Electronic Design Automation tool from the single model of the processor automatically a random program generator; and generating the at least one verification application and the at least one expected value characterizing each of the at least one state by the random program generator.

In an embodiment, the reference entity is the processor or a third-party simulator.

According to a second aspect of the present invention, there is provided a non-transitory computer-readable medium, having stored thereon instructions that when executed by a computing device, cause the computing device to perform operations comprising: receiving as an input to an Electronic Design Automation tool a single model of a processor developed from a group consisting of: the processor; a hardware description of the processor; and a processor's specifications confirmed to represent the processor and/or the hardware description; and generating automatically by the Electronic Design Automation tool the processor's programming and/or the simulation tools from the single model of the processor and a set of design parameters.

In an embodiment, the set of design parameters is empty.

In an embodiment, the non-transitory computer-readable medium further comprises: generating automatically by the Electronic Design Automation tool a verification environment in addition to the programming and/or the simulation tools from the single model of the processor; and verifying the programming tools by the verification environment by: executing at least one verification application and optional port(s) value(s) on a reference entity resulting in at least one state of at least one resource, each of the at least one state being characterized by at least one value; determining whether the at least one value characterizing each of the at least one state agrees with at least one expected value characterizing each of the at least one state; and providing the processor's programming tools when the determining shows agreement.

In an embodiment, the non-transitory computer-readable medium further comprises: modifying the developed single model of the processor when the determining does not show agreement; and repeating the method according to the first aspect of the present invention.

In an embodiment, the reference entity is the processor or a third-party simulator

In an embodiment, non-transitory computer-readable medium further comprises: generating automatically by the Electronic Design Automation tool a verification environment in addition to the programming and/or the simulation tools from the single model of the processor; and verifying the simulation tools by the verification environment by: executing at least one verification application and optional port(s) value(s) on the simulation tools, resulting in at least one state of at least one resource, each of the at least one state being characterized by at least one first value; executing the at least one verification application and optional port(s) value(s) on a reference entity, resulting in at least one state of the at least one resource, each of the at least one state being characterized by at least one second value; determining whether the at least one first value characterizing each of the at least one state agree with the at least one second value characterizing each of the corresponding at least one state; and providing the processor's simulation tools when the determining shows agreement.

In an embodiment, the method further comprises: modifying the developed single model of the processor when the determining does not show agreement; and repeating the method according to the first aspect of the present invention.

In an embodiment, the reference entity is the processor or a third-party simulator.

In an aspect of the disclosure, a method for an automation of design and optionally verification of the programming and/or simulation tools for an existing processor according to appended independent claims is disclosed. Additional aspects are disclosed in the dependent claims.

### BRIEF DESCRIPTION OF THE DRAWINGS

The foregoing aspects described herein will become more readily apparent by reference to the following description when taken in conjunction with the accompanying drawings wherein:
FIG. 1 depicts a conceptual structure and information flow among elements of the conceptual structure for automatic design and optional verification of programming and/or simulation tools for an existing processor in accordance with an aspect of this disclosure; and
FIG. 2a depicts a conceptual structure and information flow among elements of the conceptual structure for verification of the programming tools in accordance with an aspect of this disclosure.
FIG. 2b depicts a conceptual structure and information flow among elements of the conceptual structure for verification of the simulation tools in accordance with another aspect of this disclosure.
FIG. 3 depicts a flow chart of a process for verification of the programming tools.
FIG. 4 depicts a flow chart of a process for verification of the simulation tools.

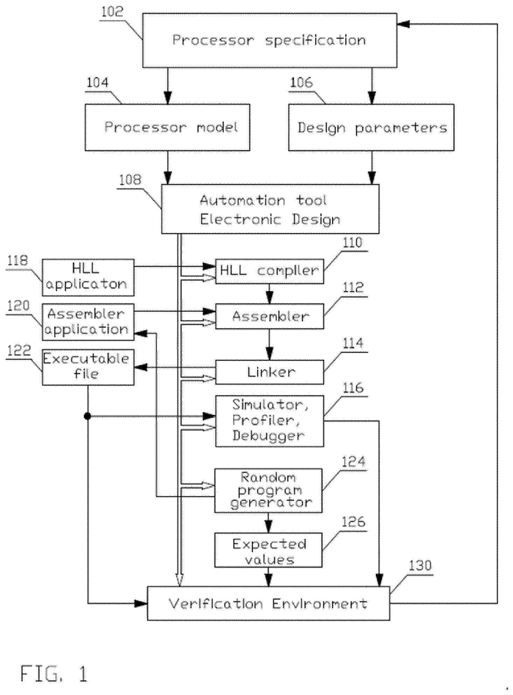

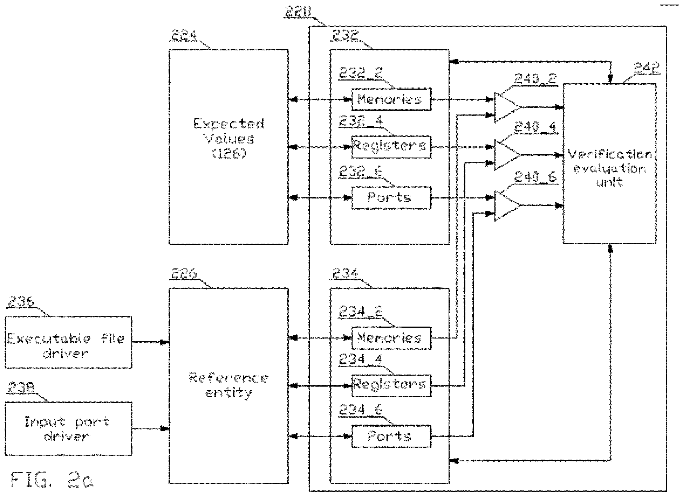

The description of like structural elements among the figures, is not repeated, the like elements have reference numerals differing by an integer multiple of 100, i.e., reference numeral 100 in FIG. 1 becomes reference numeral 200 in FIG. 2a; unless differences and/or alternative aspects are explicitly noted. An expression "_X" in a reference indicates an instance of an element of a drawing where helpful for better understanding. A double line indicates entities generated by the entity originating the double line; any unreferenced single or double-arrow line indicates a possible information flow between the depicted entities.

### DETAILED DESCRIPTION

Unless otherwise defined, all terms (including technical and scientific terms) used herein have the same meaning as commonly understood by a person having ordinary skill in the art to which this invention belongs. It will be further understood that terms, such as those defined in commonly used dictionaries, should be interpreted as having a meaning that is consistent with their meaning in the context of the relevant art and this disclosure.

As used herein, the singular forms "a," "an," and "the" are intended to include the plural forms as well, unless the context clearly indicates otherwise. It will be further understood that the terms "comprise," "comprises," and/or "comprising," when used in this specification, specify the presence of stated features, integers, steps, operations, elements, and/or components, but do not preclude the presence or addition of one or more other features, integers, steps, operations, elements, components, and/or groups thereof. The term "and/or" includes any and all combinations of one or more of the associated listed items.

As used herein, the term design of a processor is intended to refer to a design of a representation of the physical device, *e.g.,* a hardware description, as well as a design of programming and/or simulation tools.

Various disclosed aspects may be illustrated with reference to one or more exemplary configurations. As used herein, the term "exemplary" means "serving as an example, instance, or illustration," and should not necessarily be construed as preferred or advantageous over other configurations disclosed herein.

Various aspects of the present invention will be described herein with reference to drawings that are schematic illustrations of conceptual configurations of the present invention, unless explicitly noted. The various aspects of this disclosure are provided to enable a person having ordinary skill in the art to practice the present invention. Modifications to various aspects of a presented throughout this disclosure will be readily apparent to a person having ordinary skill in the art, and the concepts disclosed herein may be extended to other applications.

Concepts of a processor design and verification disclosed in a co-pending application entitled "A METHOD FOR AUTOMATIC PROCESSOR DESIGN, VALIDATION, AND VERIFICATION", application number 17/224,898, filed on 04/14/2021, incorporated therein by a reference. A person of ordinary skill in the art will understand that the disclosure below describing design and optionally verification of a programming and/or simulation tools for processor are for understanding the overall concept; as long as the processor's hardware description or the processor's specifications, confirmed to represent the processor or the hardware description, are available, the present invention is applicable.

As well known to a person of ordinary skill in the art, the complex task of processor design, resulted in development of Electronic Design Automation (EDA) tools, automating the tasks of processor design, validation, and verification, as well as generating programming and/or simulation tools, *e.g.,* high level programming language (HLL) and associated compiler, assembler, simulator, debugger, profiler, as well as hardware description in hardware description languages, *e.g.,* VHSIC Hardware Description Language (VHDL), Verilog, SystemVerilog, and other languages known to a person of ordinary skills in the art in accordance with the processor specifications. To describe an instruction set and micro-architecture of a processor, Architecture Description Languages (ADL) have been developed. The ADLs can be categorized as ALDs using templates and as generic ADLs. The first category, *i*.*e*., ADLs with templates, allows modification of limited parts of the processor. An example of an ADL using templates is a Tensilica Instruction Extension (TIE), which is further limited to customization of the Xtensa processor core architecture. The second category, *i.e.,* generic ADLs, allows modification of any part of the processor. Examples of generic ADLs are Language for Instruction Set Architectures (LISA), nML, and versions 1 and 2 of a Codasip Architecture Language (CodAL), Codasip, GmbH.

The latter category provides two models or views on the processor being designed that differ in the levels of abstraction. The first level of abstraction, represented by the instruction accurate model (IA), is simpler and targeted at design space exploration (DSE), i.e., exploring optimal instruction set. IA model is primarily aimed at the description of instruction set architecture (ISA) and defines instructions with limited implementation details. The hardware cannot be generated from the IA model, but is suitable for generating at least some of the programming and simulation tools.

The second level of abstraction, represented by the cycle accurate (CA), is targeted at micro-architecture design for the target hardware technology. From the CA model a processor hardware description is generated in the hardware description languages.

Due to the limitations of the ADLs, *i. e.,* lack of awareness of the IA model of at least some details of the CA model, potential difference in instruction implementation between the IA model and the CA model, and cannot handle programs correctly, a new type of architecture description language has been developed. Such language enables the processor specifications 102 to be described as a design of a single processor model 104 that combines, *e.g.,* by means of interleaving, the two levels of abstraction. In other words, the language is design in a way that allows to unify the instruction set description with a description of the micro-architecture details. That is, the description of an instruction contains information about when and from where the operand(s) for the instruction(s) are provided, which functional unit performs the instruction, the timing of the instruction, and when and where the results are provided. An example of the new type of a language, enabling a development of a single model is version 3 of a Codasip Architecture Language (CodAL), developed by Codasip, GmbH. Since the version identification may be subject to change, the new type of a language, enabling a development of a single model is hereinafter referred to as Codasip Architecture Language.

FIG. 1 depicts a conceptual structure and information flow among elements of the conceptual structure for design and optional verification of a processor's programming and/or simulation tools. The elements comprise hardware or software entities implementing the blocks and/or the block's functionality.

The processor specification 102 summarizes the requirements that the processor design must satisfy. Such processor specifications 102 comprise a description unifying an instruction set specifications and micro-architecture specifications and may be in a form of one or more text files, *e.g.,* one file comprising the specifications for the instruction set, another file comprising the specifications for the micro-architecture, drawings, or any other file form known to a person of ordinary skills in the art.

The single processor model 104 is written using architecture description language that enables development of the single model based on the processor specification 102, *e.g.,* the Codasip Architecture Language. Since the processor had been designed, in one aspect the single processor model 104, developed from the final processor specification 102, may already be available.

In another aspect, should such a single processor model 104 not be available, but the final processor specification 102 used to manufacture the processor, *i.e.,* the processor specification confirmed to correctly describe the processor, or the processor hardware specification be available, the single processor model 104 may be developed from this final processor specification 102.

In yet another aspect, should the final specification 102 not be available, the single processor model 104 may be developed from the hardware description, which is generally available. For a simple hardware description, such single processor model 104 may be directly described by a language that enables a development of the single model, *e.g.,* the Codasip Architecture Language. For hardware description judged to be too complex for such a direct description, a processor specification 102 is first developed from the hardware description, and the processor specification 102 is then described by the language, yielding the single processor model 104.

In yet another aspect, should neither the final processor specification 102 nor the hardware description be available, it is still possible to reverse engineer those portions of the existing processor that are necessary for description of the portion(s) of micro-architecture, instruction set, and semantics, necessary for obtaining either the processor specification 102 or the hardware description, and thus develop the single processor model 104 as disclosed *supra.* The reverse engineered portion(s) comprise, *e.g.,* pipeline depth, handling of control and structural hazards, number of functional units the processor has, as well as other parts known to a of ordinary skill in the art.

The Codasip Architecture Language is being developed by adding new features. Consequently, even if the single processor model 104 may be available, it might still be profitable to use a new version of the Codasip Architecture Language to re-develop the single processor model to take advantage of these new features. The developer of the Codasip Architecture Language, Codasip, GmbH, have internal procedures guaranteeing correct functionality of the Codasip Architecture Language.

Regardless of the manner of obtaining the single processor model 104, the single processor model 104 comprises description of the micro-architecture, instruction set, and semantics of the processor. Consequently, as disclosed *supra,* the programming and/or simulation tools generated by the EDA form the single processor model 104 are, likewise, aware of the micro-architecture, the instruction set, and the semantics of the processor.

In addition to the single processor model 104, the user may specify optional design parameters 106 influencing the behavior of the EDA tool 108. By means of an example, such parameters may comprise *e.g.,* a parameter instructing the EDA tool 108 to influence a size of simulated memories, optimization levels improving the simulation speed, or default compilation flags for the programming tools. The optionality may be implemented in different manner, *e.g.,* in an aspect the EDA tool 108 requires a set of design parameters and the set may be empty or contain at least one parameter. In another aspect the EDA tool 108 may check whether the optional design parameters 106 are or are not present and proceed accordingly.

The single processor model 104 and the optional design parameters 106 are then used as an input to the EDA tool 108. Upon receiving the single processor model 104 and the optional design parameters 106, in one aspect, the EDA tool 108 automatically generates at least the programming tools, such as an HLL compiler 110, an assembler 112, a linker 114, and simulation tools, such as a simulator, a profiler, and a debugger, collectively identified by a reference 116, and a verification environment 128. In another aspect, the EDA tool 108 additionally automatically generate a random program generator 124.

In an aspect, the linker 114 generated by the EDA tool 108, is unique for the single processor model 104. The uniqueness of the linker 114 may further improve the generated executable file 122, *e.g.,* by code size optimization. In another aspect, a linker 114 may be a stand-alone tool, common to all the different processor models 104. The EDA tool 108 may optionally generate additional utility tools (not shown), *e.g.,* tool for determining information about attributes of the compiled executable, *e.g.,* size of data, tools for parsing of debug information produced by compiler, *e.g.,* call stack reconstruction, and any additional information known to a person of ordinary skill in the art.

Akin to the development of the Codasip Architecture Language, the EDA tool 108 is being developed by adding new features, improving the functionality of the generated programming 110, 112, 114 and/or simulation tools 116, as well as guaranteeing, *via* internal procedures, correct functionality of the EDA tools 108.

Although verification of the re-designed programming 110, 112, 114 and/or simulation tools 116 is, strictly speaking, not necessary, it is desirable. Since the development of the single processor model 104 is performed by manual, non-automated coding by a human designer using the Codasip Architecture Language, like every coding process, it is prone to errors. Consequently, the programming 110, 112, 114 and/or simulation tools 116 generated from the single processor model 104 and the optional design parameters 106, may, likewise, contain errors. Furthermore, verification is useful when some processor functionality, *e.g.,* data hazards, control hazards, or structural hazards is offloaded from the processor micro-architecture to the HLL compiler 110. By means of an example, consider the case when the processor micro-architecture is not designed to handle data hazards. That is, the processor micro-architecture does not comprise structure(s) for data-hazards handling, instead the data-hazard handling is expected to be handled by the HLL compiler 110. The EDA tool 108 thus must generate the HLL compiler 110 capable of creating correct output assembler file and inserting any necessary instruction, *e.g.,* no-operation instruction, so that the executable file 122 does not contain any data-hazards with regards to the processor micro-architecture.

The omission of such structure(s) in the processor micro-architecture may be intentional, *e.g.,* the human designer may decide to trade simpler hardware for the need to handle the data hazards by the software executed by the processor. If unhandled, such a data-hazard would prevent execution of an instruction *i*2, which is depending on finished execution of an instruction *i1* immediately preceding instruction *i2.* If the instruction *i2* does not respect the dependency on the previous instruction *il,* such disrespect may lead to incorrect result(s).

Since an executable file may contain any subset of the processor instruction set, including the full set, and the instructions may be in any order, to fully verify the programming 110, 112, 114 and/or simulation tools 116, it is desirable to test any and all sequences of instructions.

The programming 110, 112, 114 and/or the simulation 116 tools are verified by means of one or more verification applications. A verification application comprises a prologue, a main body, and an epilogue. An application prologue is that part of an application that sets initial condition of the application, e.g., initialization of registers, initialization of memory, initialization of ports, and initialization of an interrupt or exception routines, and other settings known to a person of ordinary skill in the art. The main body comprises at least one sequence of at least one instruction used for a verification of the generated programming 110, 112, 114 tools and/or simulation tools 116. An application epilogue is that portion of an application that sets the condition of the application after finishing processing the main body, *e.g.,* stopping the simulator tool, reading the values of processor's resources, and setting other conditions known to a person of ordinary skill in the art. The processor's resources may comprise, *e.g.,* registers, memories, ports and other resources known to a person of ordinary skill in the art.

There are several possible sources of the verification application(s). In one aspect, a set of pre-prepared verification application(s) is provided together with the EDA tool 108. In another aspect, a third party provides a set of pre-prepared verification application(s). From the user perspective, the difference is that the former is free, the later may require additional arrangement, *e.g.,* licensing, purchase, and the like. Both, such verification application(s) sets are hand coded by either the provider of the EDA tool 108 or the third party. In both aspects, the verification application may be written in HLL 118 or in an assembly language 120. In yet another aspect, the optional random program generator 124 generates the verification application(s) in the assembly language 120. In all the above-mentioned aspects, the entity providing the verification application(s) needs to ensure that the verification application(s) provides correct state of the processor's resources, *i*.*e*., the state of the processor's resources resulting from executing the verification application(s). Such an assurance is termed self-checking thereafter.

The self-checking functionality is enabled by the knowledge of the instruction set and micro-architecture details based on the single processor model 104 and the optional design parameters 106. That is, a state of the processor's resources is deterministic based on the semantic of the instruction set and the micro-architecture. Consequently, it is possible to generate verification application(s) that are compiled to executable file 122 that may contain at least one sequence of at least one instruction together with a computed state of the processor's resources at any time during the execution of the at least one sequence of instructions. By comparing the state of the processor's resources with the computed state, the correctness of the programming 110, 112, 114 tools and simulation tools 116 can be verified.

The number of the instructions in the at least one sequence of instructions comprising the verification application depends on the goal of the verification. By means of an example, some instructions may be verified as a sequence comprising a single instruction, *e.g.,* a LOAD instruction, other instructions comprising a sequence comprising a plurality of instructions. For example, and ADD instruction needs preceding instructions setting the values on which the ADD instruction to be verified depends. It logically follows, that the use of the human designer's hand-written verification application(s) or the set of pre-prepared verification application(s) provided by the EDA tools 108, is of a limited use because it is practically impossible to satisfy such a verification goal. Therefore, in an aspect of the invention using the random program generator 124 to automatically generate the at least one sequence of instructions (ideally any and all sequences of instructions), lends itself to taking an advantage of a power of another processor (different from the processor for which the programming 110, 112, 114 and the simulation tools 116 are being re-designed), or a computer that may execute the functionality of the random program generator 124 arbitrary number of times. Furthermore, the lack of a human involvement assures errorless generation of the at least one sequence of instructions.

Although a set comprising a single verification application comprising all the required sequences of instructions may be used, it may be beneficial to provide a set comprising multiple verification applications to facilitate easier interpretation of the results and correction of potential errors.

The state of each of the processor's resource may be characterized by one or more values that each of the resource attains upon execution of the verification application. Similarly, the computed state of each of the processor's resource is characterized by one or more expected values 126. The one or more expected values can be embedded in the verification application itself, or the one or more expected values can be placed in the storage 126 separate from the verification application(s). This is true even if the execution is affected by the external event. Thus, considering, by means of an example an external event comprising an interrupt as mentioned *supra,* the processor must stop execution of the sequence of instructions, save the state of resources at the time of the interrupt, process the interrupt, and resume the execution of the sequence of instructions at the retrieved state of the processor.

The EDA tool 108 generated programming tools 110, 112, and 114 do not need to comprise certain micro-architectural structures that are not necessary for the programming tools 110, 112, and 114 function. By means of an example, the functionality of the programming tools 110, 112, and 114 does not need to be aware of and, thus, not comprise, the micro-architecture of a branch predictor, a specific implementation of a protocol ensuring communication with a memory, and other micro-architectural structures know to a person of ordinary skill in the art. In contrast, the simulation tools 116 does comprise all the micro-architectural structures.

The EDA tool 108 further generates the verification environment 128 from the single processor model 104 and the optional design parameters 106. The generated verification environment 128 comprises a program specifying usage of a set of tools, libraries and/or functions designed to support verification. In particular, the verification environment program 128 creates instances of the drivers and conceptual entities and defines relationships therebetween, as disclosed in reference to FIG. 2a *infra.* A driver is a software program that operates and/or controls a particular device/unit within a verification environment that is attached to the driver. The verification environment 128 then instructs the set of tools, libraries and/or functions how to access the drivers, conceptual entities, and how and what verification tests to execute. By means of an example, such a set of tools, libraries and/or functions may comprise tools, libraries and/or functions supplied by the EDA tool 108. Alternatively, such a set of tools comprises third party tools, *e.g.,* Universal Verification Methodology (UVM) libraries and tools provided in ModelSim by Mentor Graphics, and other tools and functions known to a person of ordinary skills in the art.

Because the random program generator 124 is generated by the EDE tool 108 as disclosed *supra,* the random program generator 124 is aware of the instruction set and semantics and the microarchitecture of the processor model 104. Therefore, the random program generator 124 may generate at least one expected value corresponding to a state of each of the resource of the processor model's 104 to be verified. The random program generator 124 then generates at least one sequence of instructions comprising at least one instruction yielding the at least one expected value.

The term expected value refers to the value of the state of the processor model's 104 resource upon execution of the at least one sequence of instructions. In case of the at least one sequence comprising more than one instruction, the random program generator 124 may generate intermediate expected values, *i.e.,* values of the processor model's 104 resources upon execution of each intermediate instruction of the sequence. Generation of the expected values and the optional intermediate expected values and the corresponding stream of instructions utilizes a satisfiability modulo theories (SMT) solver and the values are stored in expected values 126 storage. Thanks to this approach, there is no need for a reference model. The functionality of the random program generator 124 can be controlled by a set of parameters. Thus, by specifying different parameters, a user may influence the content of the verification application(s), *e.g.,* the random values of the resources, a number of sequences of instructions as well as the number of instructions in each sequence, and other parameters known to a person of ordinary skill in the art.

To verify the programming tools 110, 112, and 114 and/or the simulation tools 116, the verification environment 128 needs a reference entity (not shown), *i.e.,* an entity that guarantees that the execution of the verification application(s) compiled into the executable file 122 yields the correct state of the processor resources. In one aspect, the reference entity comprises the processor. In another aspect, the reference entity comprises a simulator, which is verified to yield the correct state of the processor resources. The simulator is not provided by the developers as a part of the EDA tool 108, therefore it is hereinafter referred to as a third-party simulator.

FIG. 2a depicts a conceptual structure and information flow among the elements of the conceptual structure for automatic design and subsequent verification of the programming 110, 112, and 114 and/or the simulation tools 1161 in accordance with an aspect of this disclosure. The elements comprise hardware or software entities implementing the structure and its functionality. To further clarify the relationship between certain blocks of FIG. 1 as referenced in FIG. 2a and associated text, references the blocks of FIG. 1, are in parenthesis.

As disclosed *supra,* the verification environment 228 is a program comprising instructions for the set of tools, libraries, and/or functions, designed to support verification. In one aspect, the verification environment 228 is communicatively coupled with a structure to accept expected values and optionally the intermediate expected values, collectively shown as unit 224, and with the reference entity 226. In another aspect, the verification environment 228 comprises the structure 224 and the reference entity 226. The EDA tools (108) further generates verification support, *e.g.,* structures 232, 234, or 242, disclosed in detail *infra.* As disclosed *supra,* the expected values (126) are provided into a storage within the expected values unit 224 by the verification application(s), so that the expected values (126) may be accessed by the expected results unit 232. The values of the processor's resources produced by the reference entity 226 may be stored in the monitor unit 234 for further evaluation.

Each of the expected results unit 232 and the monitor unit 234 comprises at least one processor's resources characterizing the processor. Such an arrangement enables verification of a single processor's resource. Although FIG. 2a depicts only processor's resources: memories 232_2, 234_2, registers 232_4, 234_4 (including register files), and output ports 232_6, 234_6 such is for illustration purposes only, and any processor's resources or hardware components known to a person of ordinary skill in the art is contemplated. A memory is a simulated representation of any physical devices used to store instructions and/or data on a temporary or permanent basis as will be implemented in the processor. A register is a simulated representation of a small amount of (fast) storage being (typically) addressed by mechanisms other than the main memory and can be thus accessed more quickly. The registers 232_4, 234_4 represent both architectural registers, *i.e.,* registers exposed to the programmer as well as micro-architectural registers, *i.e.,* registers that are not available to the programmer, but are used internally by the processor. A port is simulated representation of any physical input/output port used to pass information to other components connected to the processor.

To enable execution of an executable file (122) by the reference entity 226, the EDA tool (108) further generates an executable file driver 236. Furthermore, some executable files require that values of input ports, provided by the verification application(s), are input to the reference entity 226. Such an input port value may comprise an interrupt, data to be processed, and/or any other input known to a person of ordinary skills in the art. Consequently, the EDA tool (108) further generates an optional input port driver 238.

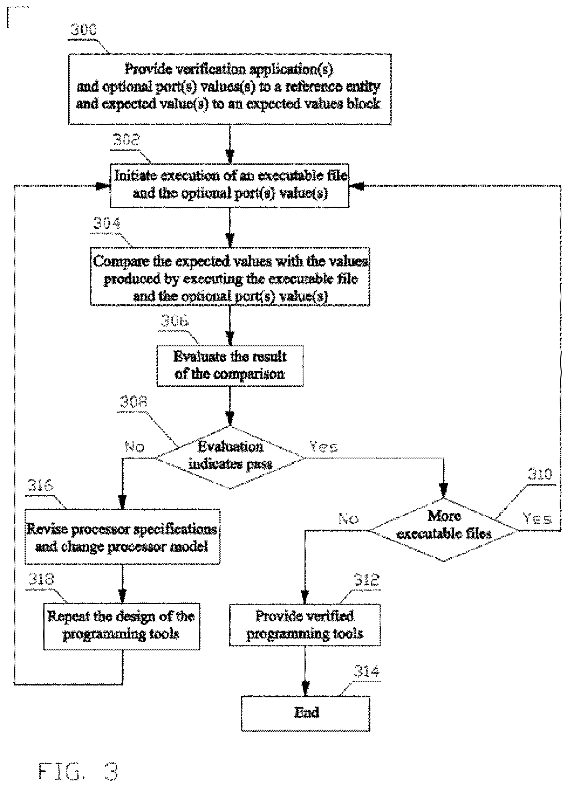

FIG. 3 depicts a flow chart of a process for verification of the programming. To further clarify the relationship between certain blocks of FIG. 1 and FIG. 2a referenced in FIG. 3 and associated text, references the blocks of FIG. 1 and FIG. 2a are in parenthesis.

In Step 300, the verification is started by providing verification applications(s) in the form of executable file(s) (122) and optional port(s) value(s). An executable file (122) is provided to the reference entity (226) *via* the executable file driver (236); the optional value(s) of input port(s) are provided to the reference entity (226) *via* the input port driver (238); and the expected values (126) are provided to block (224).

In step 302, an execution of the executable file (122) is started. Throughout the execution values of the memories (234_2), the registers (234_4), and the output ports (234_6) produced by the reference entity (226), are stored by the reference entity (226) and are passed to the monitor unit (234), and the expected values storage (224) of the memories (232_2), the registers (232_4), and the output ports (232_6), are passed to the expected values unit (232), as disclosed in detail *infra.*

In Step 304, upon the execution finish, the values from the memories (232_2) and (234_2) are provided to a comparator (240_2). The expected values unit (232) accesses the expected values storage (224), takes a snapshot of the values in the memories (232_2) and the monitor unit (234) accesses the reference entity (226) and takes a snapshot of the values in the memories (234_2).

The comparator (240_2) executes a function that steps through the values in the memories (232_2) and (234_2), compares - at each of the steps - the values between the memories (232_2) and (234_2) and provides a result of the comparison to the verification evaluation unit (242).

Identical procedure is used to obtain values in the registers (232_4) and (234_4), which are provided to a comparator (240_4). The comparator (240_4) executes a function that steps through the values in the registers (232_4) and (234_4), compares - at each of the steps - the values between the registers (232_4) and (234_4) and provides a result of the comparison to the verification evaluation unit (242).

Identical procedure is used to obtain values of the output ports (232_6) and (234_6), which are provided to a comparator (240_6). The comparator (240_6) executes a function that steps through the values of corresponding output ports (232_6) and (234_6), compares - at each of the steps - the values between the output ports (232_6) and (234_6) and provides a result of the comparison to the verification evaluation unit (242). The process continues in Step 306.

In step 306, the verification evaluation unit (242) evaluates the result of the comparison. In one aspect, such an evaluation may be a fail/pass report. However, the user may further instruct the verification evaluation unit (242) to request from the expected values unit (232) and monitor unit (234) a more detailed report. Such a report may provide, *e.g.,* specific values which differ between the expected values unit (232) and monitor unit (234), in case that the verification failed; coverage of instruction sets, *i.e.,* a number and/or a list of instructions that were executed; a number and/or a list of sequence of instructions that were executed and a number and/or a list of sequence of instructions which were not executed; register and memory values, and other information known to person of ordinary skill in the art implemented by the verification evaluation unit (242). The process continues in step 308.

In step 308, the evaluation of the fail/pass report is made. If the report is a pass, the process continues in step 310, otherwise, the process continues in step 316.

In step 310, the evaluation whether all the verification applications(s) in the form of executable file(s) (122) has been executed. If the evaluation is positive, the process continues in step 312, otherwise the process continues in step 302 wherein the next verification application in the form of executable file (122) is executed.

In step 312, the verified programming tools (110,112, and 114) are provided. The process continues in Step 314.

In Step 314, the process ends.

In step 316, the fail/pass result or the detailed report is used to revise the processor specifications (102), and change the processor model (104). The process continues in step 318.

In step 318, the design of the programming tools 110, 112, and 114 in accordance with the revised processor model (104) is repeated, and the process continues in step 302.

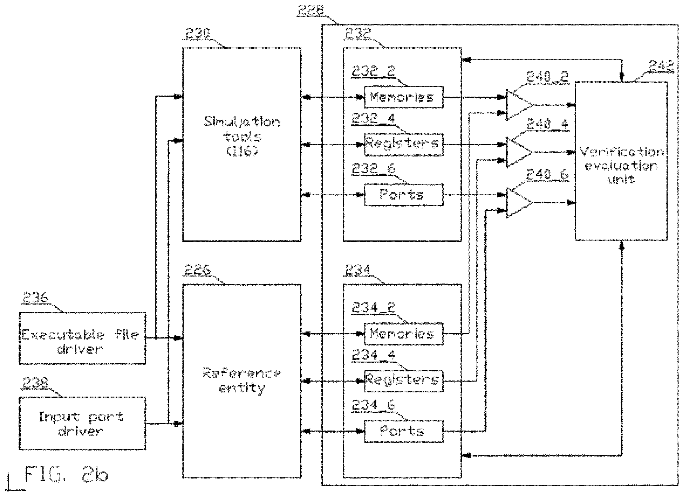

FIG. 2.b depicts a conceptual structure and information flow among elements of the conceptual structure for verification of the simulation tools in accordance with another aspect of this disclosure.

In addition to the structures and entities disclosed in reference to FIG. 2a, not repeatedly disclosed herein for the sake of brevity, the EDA tool (108) further generates a support for the reference entity depicted in block (226), by providing a communication connection with the entities 226 and 228.

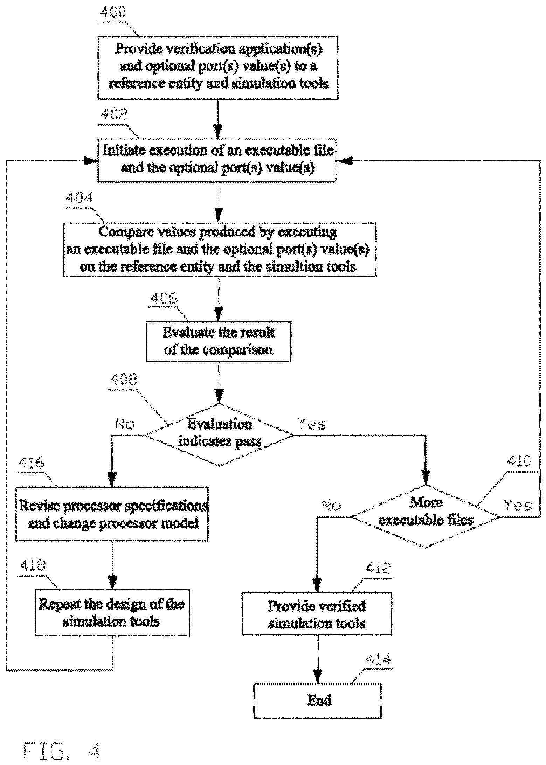

FIG. 4 depicts a flow chart of a process for verification of the simulation tools. To further clarify the relationship between certain blocks of FIG. 1 and FIG. 2b referenced in FIG. 4 and associated text, references the blocks of FIG. 1 and FIG. 2b are in parenthesis.

In Step 400, the verification is started by providing verification application(s) in the form of executable file(s) (122) and optional port(s) value(s) to both the reference entity (226) and to the simulation tools (116, 230). The executable file (122) is provided to the reference entity (226) and to the simulation tools (116, 230) *via* the executable file driver (236); the optional value(s) of the input port(s) are provided to the reference entity (226) and to the simulation tools (116, 230) *via* the input port driver (238).

In Step 402, the simulation tools (116, 230) execute the executable file (122) and the optional value(s) of input ports and pass the generated values (232) of the memories (232_2), the registers (232_4), and the output ports (232_6), to the expected values unit (232). Similarly, the reference entity (226) executes the executable file (122) and the optional value(s) of input port(s)s and passes the generated values of the memories (234_2), the registers (234_4), and the output ports (234_6) to the monitor unit (234). The process continues in step 404.

In Step 404, upon the execution finish, the values from the memories (232_2) and (234_2) are provided to a comparator (240_2). The expected values unit (232) accesses the simulation tools (116, 230), takes a snapshot of the values in the memories (232_2), and the monitor unit (234) accesses the reference entity (226) and takes a snapshot of the values in the memories (234_2).

The comparator (240_2) executes a function that steps through the values in the memories (232_2) and (234_2), compares - at each of the steps - the values between the memories (232_2) and (234_2) and provides a result of the comparison to the verification evaluation unit (242).

Identical procedure is used to obtain values in the registers (232_4) and (234_4), which are provided to a comparator (240_4). The comparator (240_4) executes a function that steps through the values in the registers (232_4) and (234_4), compares - at each of the steps - the values between the registers (232_4) and (234_4) and provides a result of the comparison to the verification evaluation unit (242).

Identical procedure is used to obtain values of the output ports (232_6) and (234_6), which are provided to a comparator (240_6). The comparator (240_6) executes a function that steps through the values of corresponding output ports (232_6) and (234_6), compares - at each of the steps - the values between the output ports (232_6) and (234_6) and provides a result of the comparison to the verification evaluation unit (242). The process continues in Step 406.

In step 406, the verification evaluation unit (242) evaluates the result of the comparison. In one aspect, such an evaluation may be a fail/pass report. However, the user may further instruct the verification evaluation unit (242) to request from the expected values unit (232) and monitor unit (234) a more detailed report. Such a report may provide, *e.g.,* specific values which differ between the expected values unit (232) and monitor unit (234), in case that the verification failed; coverage of instruction sets, *i.e.,* a number and/or a list of instructions that were executed; a number and/or a list of sequence of instructions that were executed and a number and/or a list of sequence of instructions which were not executed; register and memory values, and other information known to person of ordinary skill in the art implemented by the verification evaluation unit (242). The process continues in step 408.

In step 408, the evaluation of the fail/pass report is made. If the report is a pass, the process continues in step 410, otherwise, the process continues in step 416.

In step 410, the evaluation whether all the verification applications(s) in the form of executable file(s) (122) has been executed. If the evaluation is positive, the process continues in step 412, otherwise the process continues in step 402 wherein the next verification application in the form of executable file (122) is executed.

In step 412, the verified simulation tools (116) are provided. The process continues in Step 414.

In Step 414, the process ends.

In step 416, the fail/pass result or the detailed report is used to revise the processor specifications (102), and to change the processor model (104). The process continues in step 418.

In step 418, the design of the simulation tools (116) in accordance with the revised processor model (104) is repeated, and the process continues in step 402.

The various aspects of this disclosure are provided to enable a person having ordinary skill in the art to practice the present invention. Various modifications to these aspects will be readily apparent to persons of ordinary skill in the art, and the concepts disclosed therein may be applied to other aspects without departing from the scope of the invention. Thus, the present invention is not intended to be limited to the aspects shown herein but is to be accorded the widest scope consistent with the principles and novel features disclosed herein. By means of an example, FIG. 3 and FIG. 4 depict an aspect wherein the evaluation of the result of the comparison and the subsequent evaluation of the fail/pass report is made upon execution of each verification application. However, in another aspect, the evaluation of the result of the comparison and/or the subsequent evaluation of the fail/pass report is made after all the verification applications have been executed.

Therefore, by means of an example a person having ordinary skill in the art will understand, that the flow chart is not exhaustive because certain steps may be added or be unnecessary and/or may be carried out in parallel based on a particular implementation.

All structural and functional equivalents to the various illustrative logical blocks, modules, circuits, and algorithm steps described in connection with the various aspects described throughout this disclosure that are known or later come to be known to those of ordinary skill in the art are expressly incorporated herein by reference and are intended to be encompassed by the claims. Such illustrative logical blocks, modules, circuits, and algorithm steps may be implemented as electronic hardware, computer software, or combinations of both.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

## Claims

1. A method for a design of a processor's programming and/or simulation tools, comprising:
developing a single model of a processor from a group consisting of:
the processor;
a hardware description of the processor; and
a processor's specifications confirmed to represent the processor and/or the hardware description; and
generating automatically by an Electronic Design Automation tool the processor's programming and/or the simulation tools from the single model of the processor and a set of design parameters.

2. The method as claimed in claim 1, wherein the developing the single model of the processor comprises:
developing the single model in a language such as a Codasip Architecture Language, designed to unify a description of an instruction set and a description of a micro-architecture.

3. The method as claimed in claim 1 or 2, wherein the set of design parameters is empty.

4. The method as claimed in any of claims 1 to 3, further comprising:
generating automatically by the Electronic Design Automation tool a verification environment in addition to the programming and/or the simulation tools from the single model of the processor; and
verifying the programming tools by the verification environment by:
executing at least one verification application and optional port(s) value(s) on a reference entity, such as the processor or a third-party simulator, resulting in at least one state of at least one resource, each of the at least one state being **characterized by** at least one value;
determining whether the at least one value characterizing each of the at least one state agrees with at least one expected value characterizing each of the at least one state; and
providing the processor's programming tools when the determining shows agreement.

5. The method as claimed in claim 4, further comprising:
modifying the developed single model of the processor when the determining does not show agreement; and
repeating the method as claimed in any of claims 1 to 3.

6. The method as claimed in claim 4 or 5, wherein the at least one verification application comprises:
at least one verification application forms a set of pre-prepared verification applications provided by the Electronic Design Automation tool, wherein each verification application includes at least one expected value.

7. The method as claimed in any of claims 4 to 6, further comprising:
generating by the Electronic Design Automation tool from the single model of the processor automatically a random program generator; and
generating the at least one verification application and the at least one expected value characterizing each of the at least one state by the random program generator.

8. The method as claimed in any of claims 1 to 7, further comprising:
generating automatically by the Electronic Design Automation tool a verification environment in addition to the programming and/or the simulation tools from the single model of the processor; and
verifying the simulation tools by the verification environment by:
verification application and optional port(s) value(s) on the simulation tools, resulting in at least one state of at least one resource, each of the at least one state being **characterized by** at least one first value;
executing the at least one verification application and optional port(s) value(s) on a reference entity, such as the processor or a third-party simulator, resulting in at least one state of the at least one resource, each of the at least one state being **characterized by** at least one second value;
determining whether the at least one first value characterizing each of the at least one state agree with the at least one second value characterizing each of the corresponding at least one state; and
providing the processor's simulation tools when the determining shows agreement.

9. The method as claimed in claim 8, further comprising:
modifying the developed single model of the processor when the determining does not show agreement; and
repeating the method as claimed in any of claims 1 to 8.

10. The method as claimed in claim 8 or 9, wherein the verification application comprises:
at least one verification application forms a set of pre-prepared verification applications provided by the Electronic Design Automation tool, wherein each verification application includes at least one expected value.

11. The method as claimed in any of claims 8 to 10, further comprising:
generating by the Electronic Design Automation tool from the single model of the processor automatically a random program generator; and

12. generating the at least one verification application and the at least one expected value characterizing each of the at least one state by the random program generator. A non-transitory computer-readable medium, having stored thereon instructions that when executed by a computing device, cause the computing device to perform operations comprising:
receiving as an input to an Electronic Design Automation tool a single model of a processor developed from a group consisting of:
the processor;
a hardware description of the processor; and
a processor's specifications confirmed to represent the processor and/or the hardware description; and

13. generating automatically by the Electronic Design Automation tool the processor's programming and/or the simulation tools from the single model of the processor and a set of design parameters, optionally wherein the set of design parameters is empty.The non-transitory computer-readable medium as claimed in claim 12, further comprising:
generating automatically by the Electronic Design Automation tool a verification environment in addition to the programming and/or the simulation tools from the single model of the processor; and
verifying the programming tools by the verification environment by:
executing at least one verification application and optional port(s) value(s) on a reference entity, such as the processor or a third-party simulator, resulting in at least one state of at least one resource, each of the at least one state being **characterized by** at least one value;
determining whether the at least one value characterizing each of the at least one state agrees with at least one expected value characterizing each of the at least one state; and
providing the processor's programming tools when the determining shows agreement.

14. The non-transitory computer-readable medium as claimed in claim 12 or 13, further comprising:
generating automatically by the Electronic Design Automation tool a verification environment in addition to the programming and/or the simulation tools from the single model of the processor; and
verifying the simulation tools by the verification environment by:
executing at least one verification application and optional port(s) value(s) on the simulation tools, resulting in at least one state of at least one resource, each of the at least one state being **characterized by** at least one first value;
executing the at least one verification application and optional port(s) value(s) on a reference entity, such as the processor or a third-party simulator, resulting in at least one state of the at least one resource, each of the at least one state being **characterized by** at least one second value;
determining whether the at least one first value characterizing each of the at least one state agree with the at least one second value characterizing each of the corresponding at least one state; and
providing the processor's simulation tools when the determining shows agreement.

15. The non-transitory computer-readable medium as claimed in any of claims 12 to 14, further comprising:
modifying the developed single model of the processor when the determining does not show agreement; and
repeating the method as claimed in any of claims 1 to 11.
